# EUROPEAN PATENT SPECIFICATION

(11) **EP 3 453 513 B1**
(45) Date of publication and mention of the grant of the patent: **30.08.2023**
(21) Application number: 17189573.3
(22) Date of filing: 06.09.2017
(51) Int. Cl.: B29C 48/285, B29C 48/09, B29C 48/155, B65G 47/28, A01G 25/02, B29C 48/34

(54) **PRODUCTION LINE FOR A DRIP IRRIGATION TUBE**
PRODUKTIONSLINIE FÜR EIN TROPFBEWÄSSERUNGSROHR
LIGNE DE PRODUCTION D'UN TUBE D'IRRIGATION GOUTTE À GOUTTE

(43) Date of publication of application: 13.03.2019
(73) Proprietor: Advanced Automation Systems Ltd., 3056 Limassol (CY)
(72) Inventor: Bolinis, Christos, 34100 Halkida (GR)
(74) Representative: LBP Lemcke, Brommer & Partner Patentanwälte mbB

(56) References cited:
- WO-A1-2012/164564
- DE-A1- 19 805 618
- GB-A- 108 382
- NL-C- 37 895
- US-A- 2 375 965
- US-A- 2 792 098
- US-A- 3 781 945
- US-A- 4 036 411

## Description

The present invention relates to a feeding device for use in a production line, in particular to a dripper feeding device for feeding drippers to a dripping pipe production line, in which the feeding device has a rotating body with a helical transport structure at its circumferential surface and wherein the helical transport structure is designed for feeding individual components in a transport direction to a subsequent processing machine.

A dripper feeding device, which feeds drippers to a dripping pipe production line is known from WO 2012/164564 A1. The dripper feeding device rotates about a rotation axis and comprises a cylindrical feeder body and at least one helix made on the cylindrical face of the feeder body. The helix can be a protruding helix or a submerged helix. A rotation means rotates said dripper feeding device at a controlled speed.

The described feeding device may become unstable and inaccurate at higher feeding speed. In particular, when the leading tip of the helix of the cylindrical feeding device enters between two consecutive drippers, the leading tip of the helix pushes smoothly the first dripper towards the production direction but at the same time pushes the subsequent drippers that follow in a row on the corresponding conveying rail backwards, i.e. against to the pipe production direction. This causes feeding instability of the drippers.

It is therefore an object of the present invention to provide a production line for a drip irrigation tube with a feeding device for feeding drippers to a dripping pipe production line, which allows more stable feeding of the drippers to a subsequent processing stage and thus enables higher production speed and/or feeding accuracy and which is less prone to malfunction.

These and other objects that appear below are achieved by a production line for a drip irrigation tube with a feeding device in accordance with claim 1. Advantageous embodiments are described in the dependent claims.

In particular, and in accordance with the present invention, the production line for a drip irrigation tube comprises a feeding device arranged for feeding drippers at a controlled speed to an extruder die head arranged for extruding said tube from molten raw plastic material, the feeding device comprising a rotating body with a helical transport structure at its circumferential surface, an outer diameter of which defines a conical form of said rotating body having an aperture angle. The rotating body is arranged such that its rotational axis is inclined with respect to the transport direction by half its aperture angle.

A particular advantage of this is that the conical form of the conveyor helix continuously increases the feeding speed of the dripper during rotation of the rotating body from when the dripper first contacts with the helix until the helix delivers the dripper to the subsequent processing stage due to the increasing diameter of the conical helix. Consequently, the helix, which acts as kind of a screw conveyor, receives and linearly moves the dripper forward towards the subsequent processing stage at a lower initial speed.

According to one aspect of the invention, the rotating body of the feeding device comprises at its circumferential surface a protrusion located ahead of a leading end of the helical transport structure. The protrusion is arranged to temporarily engage by the rotation of the rotating body with a recess in a surface of said drippers to be transported and to retard while being engaged said dripper from being received by said helical transport structure.

The purpose of the protrusion is to instantly hold the drippers, which are conveyed for instance by a conveyor belt to the feeding device. The protrusion thus creates a large enough gap between two consecutive drippers that the leading tip of the helix can catch between the two consecutive drippers. The helix forwards the received dripper in linear direction without making contact with the subsequent dripper. This leads to a smooth, accurate, stable and non-vibrating operation of feeding of drippers.

In contrast, system described in the aforementioned application WO 2012/164564 A1 becomes unstable and inaccurate. When the leading tip of the helix of the cylindrical feeding device enters between two consecutive components, it slightly pushes the first component in production direction and at the same time pushes the subsequent and all following components backwards in counter direction, thus causing feeding instability of the components. In contrast to the current invention, the cylindrical feeding device in the prior art does not create a gap between consecutive components for a smooth engagement of the components with the transport helix.

In an embodiment, the distance in transport direction between the protrusion and the leading end of the helical transport structure can be chosen in dependence of the location of the recess of said drippers. The rotating body is thus perfectly matched to the design of the drippers it is designed to operate with, which leads to a perfectly smooth and accurate feeding of such drippers.

The protrusion may have a circumferential length with no pitch or at least a smaller pitch than the helical transport structure, so that a dripper while being engaged with said protrusion, as the rotating body rotates, experiences a lower feed speed in transport direction than a dripper received by the helical transport structure.

The helical transport structure can be chosen from is either a protruding ridge or a recessed notch, i.e. can be either protruded or submerged with respect to the circumferential surface of the rotating body.

In a particular embodiment, the helical transport structure can have only a single helical loop. The helical transport structure may thus deliver with high precision one component per rotation to the subsequent processing stage.

Preferably, the helical transport structure has a pitch which corresponds to a lateral dimension of the dripper, i.e. its length, being oriented in the transport direction. The helix will thus forward the dripper in transport direction by one dripper length per rotation. Moreover, the dripper will be safely and accurately received between the leading and the trailing edge of the helix.

The feeding device in the preferred embodiment is arranged for feeding the drippers to an inside of the pipe as it is extruded by said extruder, so that the drippers will make contact with the still soft and sticky material of the tube and will easily stick to the inside wall of the tube as it makes contact there.

The feeding device within the production line according to the present invention may contain a drive unit which rotates the rotating body during operation at a speed of up to 2000 RPM or even higher. The actual rotational speed depends on the desired distance of the drippers inside the pipe - the higher the rotational speed of the feeding device, the shorter the distance between drippers inside the pipe. A typical minimum spacing required today by farmers is in the range of 10 cm.

The feeding device within the production line according to the invention may further have a compressed air supply coupled with the rotating body to support feeding by pulses of compressed air in synchronism with the angular position of said rotating body. The compressed air supply can be located, aligned, and controlled in such a way as to facilitate feeding. Control of the compressed air supply can be achieved by mechanical means which synchronize with the functions of other parts of the feeding system to ensure smooth dripper feeding.

The feeding device within the production line according to the invention may further comprising a support rail and/or a conveyor belt oriented in the transport direction along which the components are moved by the helical transport structure in operation of said rotating body.

Other aspects, features, and advantages will be disclosed in the following description of embodiments.

### Brief Description of the Drawings

Embodiments of the present invention will be described below with reference to the accompanying drawings, in which
- fig. 1: shows side view of a feeding device in accordance with the present invention;
- fig. 2: shows a front view of the feeding device of fig. 1 looking into transport direction; and
- fig. 3: the feeding device of figure 1 and a subsequent processing stage including an extruder die head.

The embodiment described below relates to a production line for a drip irrigation pipe or hose. Drip irrigation is an irrigation method that delivers water in small doses directly to the roots of plants, either onto the soil surface or directly onto the root zone of crop plants. Thus, wasted water due to run-off, evaporation, or the like is substantially reduced. An emitter, which is also termed a "dripper", is used to transfer water from a pipe or hose to the area that is to be irrigated. An emitting pipe or hose is a type of drip irrigation tubing with emitters pre-installed at the factory with specific distance and flow per hour as per crop distance.

An irrigation hose of the type described below has emitters attached to the inside wall with a defined spacing between the individual emitters. Perforations are drilled into the hose wall close to a water basin of the emitters, respectively, so that water can be delivered in small doses, depending on the design of the emitter. Typical emitter flow rates are from 0.6 to 16 liters per hour.

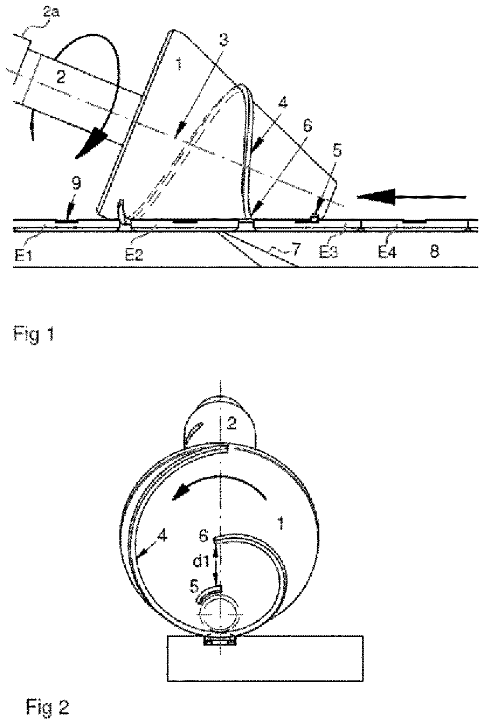

Figure 1 shows a feeding device for the emitters. The device contains a conical body 1, which has the form of a truncated cone. The conical body 1 has a shaft 2, which is driven by a drive means 2a such as a motor so that in operation, the body 1 rotates about its longitudinal axis 3 at a controlled speed. At its circumferential surface, the body 1 has a helical transport structure 4, such as a protruding helix.

The conical body 1 is installed above a guide rail 8 such that the rotational axis 3 of the conical body 1 is inclined by half its aperture angle, i.e. such that its lateral surface where it faces guide rail 8 is substantially parallel to the latter. The transport structure 4 operates similar to a conveyor screw. Emitters are moved along the guide rail by the rotation of the body 1 through the forward thrust of the helix 4. The pitch of the helix 4 corresponds substantially to the length of an emitter so that the emitter, as it is received by the helix is moved forward by one emitter length per full 360° rotation of the body 1.

It has to be noted in this regard that it is not essential that the body 1 has the form of a truncated cone as shown in the embodiment and that the invention is not limited to the specific form shown. Instead, it would equally be possible that the inside body 1 has a straight non-conical form for instance and that the height of the helical ridge extending in radial direction from the surface of the rotating body 1 and forming the helix 4 increases in the transport direction. In other words, the outer diameter of said helical transport structure 4 follows a conical form - either through the conical form of the rotating body itself or by an increasing ridge height of the helix 4 extending from the rotating body 1.

Coming back to figure 1, four emitters E1-E4 are shown in the figure on the guide rail 8. The direction of transport is from right to left as indicated by an arrow. Each of the emitter E1-E4 has in about the middle of its upper surface side a small recess 9, which serves as a water basin.

As can be seen in figure 2, the conical body 1 has at its circumferential surface a protrusion 5 located ahead of a leading tip 6 of the helix 4. The distance d1 between protrusion 5 and the tip end 6 of the helix 4 corresponds to the distance between the leading edge of an emitter E1-E4 and its basin 9, more particularly to the trailing edge of the basin 9. The protrusion 5 is therefore located such that by the rotation of the conical body 1 the protrusion 5 engages with the water basin 9 of an emitter - such as emitter E3 shown in figure 1. Contrary to the helix 4, the protrusion has no pitch (or an at least much lower pitch). Therefore, as long as the protrusion is engaged with the water basin 9 of an emitter E3, this emitter does not experience a forward thrust but is temporarily retarded. This small retardation creates a gap between the preceding emitter E2 and the emitter the protrusion 5 currently engages with. The gap is large enough that the leading tip 6 of the helix 4 can enter between the two emitters E3, E2 without even contacting them.

Once the protrusion 5 disengages with the water basin 9 of emitter E3, emitter E3 will enter the helix 4 and will then be linearly forwarded by helix 4. This forward movement is supported by a pulse of compressed air, which is blown through channel 7 from a nozzle arranged below guide rail 8.

The compressed air is provided by pulses and is sprayed within a mechanically adjustable time period in order to push forward the dripper E2 ensuring that it is constantly touching the rotating helix 4. The purpose of the compressed air is to create the gap d2 between two consecutive drippers E2, E3.

The truncated cone shape of the rotating body facilitates smooth engagement or "grabbing" of the drippers and a linear movement thereof towards the subsequent processing stage in the direction of transport.

When the truncated cone body 1 rotates about its longitudinal axis 3, the helix 4 receives and moves a dripper E3 from the side with the small base of the truncated cone body 1 towards the side with the large base. The speed of the grabbed dripper increases continuously during rotation of the truncated cone 1 due to the diameter of the truncated cone 1 increasing in transport direction. Consequently, the helix 4, which acts as a feeding helical thread, receives and linearly moves forward the dripper towards the pipe production direction at an initial lower speed, which contributes to a smoother and more stable transport of the drippers E.

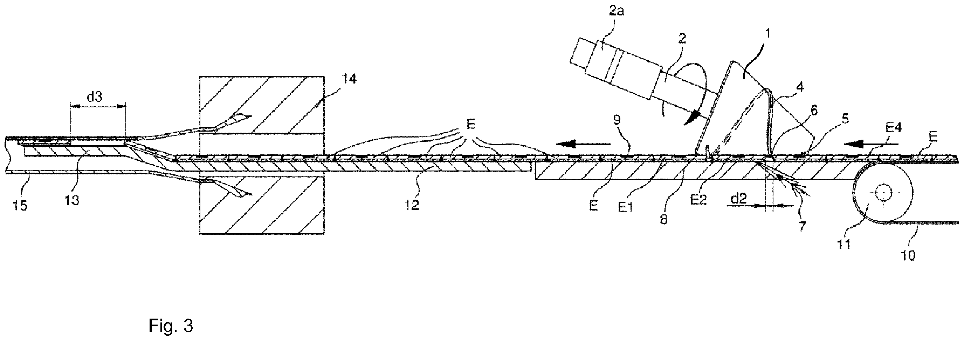

The production line for the irrigation hose with the subsequent processing stage is shown in figure 3. The direction of transport is from right to left. Emitters E are delivered from a conveyor belt 10 to the feeding device and its rotating conveyor screw 1. The drippers conveyor belt 10 does not pass under the rotating screw conveyor 1 but extends to the edge of the drippers guide rail 8 which is below the rotating screw conveyor 1. The emitters E leave the conveyor belt 10 at the idler pulley 11 and are from there pushed onto the guide rail 8, which abuts to idler pulley 11 and aligns with the conveyor belt 10 in transport direction.

An emitter E arriving at the guide rail 8 is then briefly stopped and retarded by the protrusion 5 engaging with its water basin recess 9 so that gap d2 is created between it and its immediately preceding emitter. By the rotation of the conveyor screw 1, the leading tip 6 of the helix enters into the gap d2 and forwards and accelerates the emitter.

The main purpose of the rotating screw conveyor 1 is to exactly position and singularize the drippers E on their way to the subsequent processing stage and also to push the drippers forward with controlled and steady speed. The protrusion 5 instantly holds the drippers, which are conveyed by the dripper's conveyor belt towards the rotating conical screw conveyor 1. With additional forward thrust of the dripper E2, by means of compressed air and in conjunction with the position of the protrusion 5 and the leading tip 6 of the helix 4, a large enough gap between two consecutive drippers is created where the leading tip 6 of the helix 4 can enter. Thus, the helix 4 linearly forwards the dripper E2 without touching the dripper E3 (see figure 1) ensuring smooth, accurate, stable and non-vibrating feeding of the drippers.

Behind the rotating screw conveyor 1 the emitters E move forward on guide rail 8, designed to transport a specific product of a specific shape, i.e. the drippers E, pushed by the helix 4 of the rotating screw conveyor 1. Every complete turn of the rotating screw conveyor 1 corresponds to a forward movement equal to the length of one dripper E.

In transport direction behind the guide rail 8 follows a further guide rail 12 termed the "stinger". Towards its far end 13, the stinger 12 is slightly offset and bent up. The stinger 12 passes through an extruder die head 14, from which a pipe 15 is extruded, and ends just after the point where the inner surfaces of the extruded pipe 15 become parallel to each other.

The extrusion of plastics is a manufacturing process in which raw plastic material is molten and formed into a continuous profile such as a pipe, hose, tube or the like. An extruder has the function of heating the raw plastic material to molten state and then force it through a die, which shapes the material into a product of the desired shape. The extruder has a rotating extruder screw, which forces the plastic beads forward into a heated barrel. The plastic beads gradually melt as they are pushed through the barrel. Extra heat is contributed by the intense pressure and friction taking place inside the barrel.

At the front of the barrel, the molten plastic leaves the screw and travels through a screen pack breaker plate which removes any contaminants in the melt and also converts a rotational movement of the molten plastic into axial movement. After passing through the breaker plate, molten plastic enters the extrusion die head 14. The purpose of the extrusion die head 14 is to form the molten resin into its final or near-final shape prior to quenching. The die is what gives the final product its profile and is designed so that the molten plastic evenly flows from a cylindrical profile, to the product's profile shape. When resin enters the extrusion die from the extruder and screen changer, the melt flow channel is usually in the form of circular supply orifice. The extrusion die converts this rod of resin into an annular (tubular) shape to form a pipe. The size of the pipe - diameter and thickness - are formed by different size tooling types - mandrel and die - of the cross head.

A crosshead extrusion die 14, shown as a simple schematic by longitudinal sectional view the in the embodiment of figure 3, has an operational centerline that is perpendicular to the extruder screw axis. This is used in the embodiment to feed the drippers E by the stinger 12 from behind the crosshead 14 through an opening along its centerline directly into the tube 15 as it is extruded from the crosshead die. The stinger bending up at its end 13 directs the emitters towards the inner wall of the pipe 15. Since the material of the tube 15 as it leaves the crosshead die 14 is still viscid and sticky, the emitter sticks there and the offset end 13 of the stinger 12, which guides and holds the emitter against the inside wall of the tube 15 as it is tensioned away from the crosshead die while the material begins to solidify, makes sure the emitter is firmly attached to where it first contacts and sticks to the inside wall of the tube 15.

One of the basic requirements for the production of drip line tube 15 is the controlled placement and adhesion of the drippers E on the inner wall of the tube 15, to the desired distance between them, i.e. the drippers spacing d3. The creation of the desired dripper spacing d3 results from the properly controlled steady feeding speed of the emitter E as they are delivered by the conveyor screw 1 of the drippers feeder and the extrusion speed of the tube 15.

## Claims

1. A production line for a drip irrigation tube comprising a feeding device arranged for feeding drippers (E, E1-E4) at a controlled speed to an extruder die head (14) arranged for extruding said tube (15) from molten raw plastic material, the feeding device comprising a rotating body (1) with a helical transport structure (4) at its circumferential surface, the helical transport structure (4) being designed for feeding individual drippers (E, E1-E4) in a transport direction to an inside of said tube (15) as it is extruded by said extruder die head (14),
**characterized in that**
an outer diameter of said helical transport structure (4) defines a conical form of said rotating body (1) having an aperture angle and that a rotational axis (3) of said rotating body (1) is inclined with respect to the transport direction by half the aperture angle.

2. A production line according to claim 1, wherein the rotating body (1) of the feeding device comprises at its circumferential surface a protrusion (5) located ahead of a leading end (6) of the helical transport structure (4), which protrusion (5) is arranged to temporarily engage by the rotation of the rotating body (1) with a recess (9) in a surface of said drippers (E, E1-E4) to be transported and to retard while being engaged said dripper (E, E1-E4) from being received by said helical transport structure (4).

3. A production line according to claim 2, wherein said protrusion (5) is located such that the distance (d1) in transport direction between the protrusion (5) and the leading end (6) of the helical transport structure (4) is chosen in dependence of the location of the recess (9) of said drippers (E, E1-E4).

4. A production line according to claim 2 or 3, wherein said protrusion (5) has a circumferential length with no pitch or at least a smaller pitch than the helical transport structure (4), so that a dripper (E, E1-E4) while being engaged with said protrusion (5), as the rotating body (1) rotates, experiences a lower forward thrust in transport direction than a dripper (E, E1-E4) received by the helical transport structure (4).

5. A production line according to any of the preceding claims, wherein said helical transport structure (4) is either a protruding ridge or a recessed notch.

6. A production line according to any of the preceding claims, wherein said helical transport structure (4) comprises only a single helical loop.

7. A production line according to any of the preceding claims, wherein said helical transport structure (4) has a pitch which corresponds to a lateral dimension of said dripper (E, E1-E4) being oriented in the transport direction

8. A production line according to any of the preceding claims, wherein the feeding device further comprises a compressed air supply (7) controlled to support feeding by pulses of compressed air in synchronism with the angular position of said rotating body (1).

9. A production line according to any of the preceding claims, wherein the feeding device further comprises a support rail (8) oriented in the transport direction along which the drippers (E, E1-E4) are moved by the helical transport structure (4) at operation of said rotating body (1).

10. A production line according to any of the preceding claims, wherein said extruder die head (14) is of a crosshead type and wherein the production line comprises a guide rail (12) extending through the extruder die head (14) and into the extruded tube as it is tensioned away from the extruder die head (14).

## Patentansprüche

1. Produktionslinie für ein Tropfbewässerungsrohr, umfassend eine Zuführvorrichtung, die zum Zuführen von Tropfern (E, E1-E4) mit einer gesteuerten Geschwindigkeit zu einem Extruderdüsenkopf (14) angeordnet ist, der zum Extrudieren des Rohrs (15) aus geschmolzenem Rohkunststoffmaterial angeordnet ist, wobei die Zuführvorrichtung einen rotierenden Körper (1) mit einer spiralförmigen Transportstruktur (4) an seiner Umfangsfläche umfasst, wobei die spiralförmige Transportstruktur (4) zum Zuführen einzelner Tropfer (E, E1-E4) in einer Transportrichtung zu einer Innenseite des Rohrs (15) ausgelegt ist, während es von dem Extruderdüsenkopf (14) extrudiert wird,
**dadurch gekennzeichnet, dass**
ein Außendurchmesser der spiralförmigen Transportstruktur (4) eine konische Form des rotierenden Körpers (1) definiert, der einen Öffnungswinkel aufweist, und dass eine Rotationsachse (3) des rotierenden Körpers (1) in Bezug auf die Transportrichtung um die Hälfte des Öffnungswinkels geneigt ist.

2. Produktionslinie nach Anspruch 1, wobei der rotierende Körper (1) der Zuführvorrichtung an seiner Umfangsfläche einen Vorsprung (5) umfasst, der vor einem Vorderende (6) der spiralförmigen Transportstruktur (4) liegt, wobei der Vorsprung (5) so angeordnet ist, dass er durch die Rotation des rotierenden Körpers (1) vorübergehend mit einer Aussparung (9) in einer Oberfläche der zu transportierenden Tropfer (E, E1-E4) in Eingriff gelangt und während des Eingriffs den Tropfer (E, E1-E4) zurückhält, von der spiralförmigen Transportstruktur (4) aufgenommen zu werden.

3. Produktionslinie nach Anspruch 2, wobei der Vorsprung (5) so liegt, dass der Abstand (d1) in Transportrichtung zwischen dem Vorsprung (5) und dem Vorderende (6) der spiralförmigen Transportstruktur (4) in Abhängigkeit von der Lage der Aussparung (9) der Tropfer (E, E1-E4) gewählt ist.

4. Produktionslinie nach Anspruch 2 oder 3, wobei der Vorsprung (5) eine Umfangslänge ohne Steigung oder mit zumindest einer geringeren Steigung als die spiralförmige Transportstruktur (4) aufweist, sodass ein Tropfer (E, E1-E4), während er in Eingriff mit dem Vorsprung (5) steht, wenn der rotierende Körper (1) rotiert, einen geringeren Vorwärtsschub in Transportrichtung als ein Tropfer (E, E1-E4) erfährt, der von der spiralförmigen Transportstruktur (4) aufgenommen ist.

5. Produktionslinie nach einem der vorstehenden Ansprüche, wobei die spiralförmige Transportstruktur (4) entweder eine hervorstehende Kante oder eine vertiefte Kerbe ist.

6. Produktionslinie nach einem der vorstehenden Ansprüche, wobei die spiralförmige Transportstruktur (4) nur eine einzige spiralförmige Schleife umfasst.

7. Produktionslinie nach einem der vorstehenden Ansprüche, wobei die spiralförmige Transportstruktur (4) eine Steigung aufweist, die einer seitlichen Abmessung des in der Transportrichtung ausgerichteten Tropfers (E, E1-E4) entspricht.

8. Produktionslinie nach einem der vorstehenden Ansprüche, wobei die Zuführvorrichtung weiter eine Druckluftversorgung (7) umfasst, die so gesteuert wird, dass sie Zufuhr durch Druckluftimpulse synchron mit der Winkelposition des rotierenden Körpers (1) unterstützt.

9. Produktionslinie nach einem der vorstehenden Ansprüche, wobei die Zuführvorrichtung weiter eine in Transportrichtung ausgerichtete Tragschiene (8) umfasst, entlang derer bei Betrieb des rotierenden Körpers (1) die Tropfer (E, E1-E4) durch die spiralförmige Transportstruktur (4) bewegt werden.

10. Produktionslinie nach einem der vorstehenden Ansprüche, wobei der Extruderdüsenkopf (14) vom Kreuzkopftyp ist und wobei die Produktionslinie eine Führungsschiene (12) umfasst, die sich durch den Extruderdüsenkopf (14) und in das extrudierte Rohr erstreckt, wenn es vom Extruderdüsenkopf (14) weggezogen wird.

## Revendications

1. Ligne de production pour un tube d'irrigation goutte à goutte comprenant un dispositif d'acheminement agencé pour acheminer des goutteurs (E, E1-E4) à une vitesse commandée vers une tête de filière d'extrudeuse (14) agencée pour extruder ledit tube (15) à partir d'une matière plastique brute fondue, le dispositif d'acheminement comprenant un corps rotatif (1) avec une structure de transport hélicoïdale (4) au niveau de sa surface circonférentielle, la structure de transport hélicoïdale (4) étant conçue pour acheminer des goutteurs individuels (E, E1-E4) dans une direction de transport vers un intérieur dudit tube (15) lorsqu'il est extrudé par ladite tête de filière d'extrudeuse (14),
**caractérisée en ce que**
un diamètre extérieur de ladite structure de transport hélicoïdale (4) définit une forme conique dudit corps rotatif (1) présentant un angle d'ouverture et **en ce qu'**un axe de rotation (3) dudit corps rotatif (1) est incliné par rapport à la direction de transport de la moitié de l'angle d'ouverture.

2. Ligne de production selon la revendication 1, dans laquelle le corps rotatif (1) du dispositif d'acheminement comprend au niveau de sa surface circonférentielle une saillie (5) située devant une extrémité avant (6) de la structure de transport hélicoïdale (4), laquelle saillie (5) est agencé pour venir en prise temporairement par la rotation du corps rotatif (1) avec un évidement (9) dans une surface desdits goutteurs (E, E1-E4) à transporter et pour retarder, tout en étant en prise, la réception dudit goutteur (E, E1-E4) par ladite structure de transport hélicoïdale (4).

3. Ligne de production selon la revendication 2, dans laquelle ladite saillie (5) est située de telle sorte que la distance (d1) dans la direction de transport entre la saillie (5) et l'extrémité avant (6) de la structure de transport hélicoïdale (4) est choisie en fonction de l'emplacement de l'évidement (9) desdits goutteurs (E, E1-E4).

4. Ligne de production selon la revendication 2 ou 3, dans laquelle ladite saillie (5) présente une longueur circonférentielle sans pas ou au moins à un pas plus petit que la structure de transport hélicoïdale (4), de sorte qu'un goutteur (E, E1-E4) tout en étant en prise avec ladite saillie (5), lorsque le corps rotatif (1) tourne, subit une poussée vers l'avant inférieure dans la direction de transport par rapport à un goutteur (E, E1-E4) reçu par la structure de transport hélicoïdale (4).

5. Ligne de production selon l'une quelconque des revendications précédentes, dans laquelle ladite structure de transport hélicoïdale (4) est soit une nervure en saillie soit une encoche en retrait.

6. Ligne de production selon l'une quelconque des revendications précédentes, dans laquelle ladite structure de transport hélicoïdale (4) ne comprend qu'une seule boucle hélicoïdale.

7. Ligne de production selon l'une quelconque des revendications précédentes, dans laquelle ladite structure de transport hélicoïdale (4) présente un pas qui correspond à une dimension latérale dudit goutteur (E, E1-E4) orienté dans la direction de transport.

8. Ligne de production selon l'une quelconque des revendications précédentes, dans laquelle le dispositif d'acheminement comprend en outre une alimentation en air comprimé (7) commandée pour supporter un acheminement par impulsions d'air comprimé en synchronisme avec la position angulaire dudit corps rotatif (1).

9. Ligne de production selon l'une quelconque des revendications précédentes, dans laquelle le dispositif d'acheminement comprend en outre un rail de support (8) orienté dans la direction de transport le long duquel les goutteurs (E, E1-E4) sont déplacés par la structure de transport hélicoïdale (4) lors du fonctionnement dudit corps rotatif (1).

10. Ligne de production selon l'une quelconque des revendications précédentes, dans laquelle ladite tête de filière d'extrudeuse (14) est du type tête d'équerre et dans laquelle la ligne de production comprend un rail de guidage (12) s'étendant à travers la tête de filière d'extrudeuse (14) et jusque dans le tube extrudé lorsqu'il est tendu à l'écart de la tête de filière d'extrudeuse (14).
